# EUROPÄISCHE PATENTSCHRIFT

(11) **EP 0 282 878 B1**
(45) Veröffentlichungstag und Bekanntmachung des Hinweises auf die Patenterteilung: **14.06.1995**
(21) Anmeldenummer: 88103634.7
(22) Anmeldetag: 08.03.1988
(51) Int. Cl.: G02B 6/34, G02B 5/18

(54) **Anordnung für ein integriert-optisches Spektrometer und Verfahren zur Herstellung eines solchen Spektrometers**
Arrangement of optical-integrated spectrometer and method for the making the same
Dispositif de spectromètre optique intégré et son procédé de fabrication

(30) Priorität: 16.03.1987 DE 3708526
(43) Veröffentlichungstag der Anmeldung: 21.09.1988
(60) Teilanmeldung: 93108783.7
(73) Patentinhaber: SIEMENS AKTIENGESELLSCHAFT, 80333 München (DE)
(72) Erfinder: Cremer, Cornelius, Dr. rer. nat., D-8000 München 90 (DE); März, Reinhard, Dr. phil. nat., D-8000 München 80 (DE)

(56) Entgegenhaltungen:
- EP-A- 0 149 270
- EP-A- 0 200 874
- US-A- 4 326 911
- JOURNAL OF LIGHTWAVE TECHNOLOGY, Band LT-4, Nr. 9, September 1986, Seiten 1304-1310, IEEE, New York, US ; S.-Y. HUANG et al. : "Blazed grating couplers on LiNb03 optical channel waveguides and their applications to integrated optical circuits"
- APPLIED PHYSICS LETTERS, Band 48, Nr. 3, 20. Januar 1986, Seiten 230-232, American Institute of Physics, New York, US ; W. KATZSCHNER et al. : "Reactive ion beam etching of InP with N2 and N2/02 mixtures"
- PATENT ABSTRACTS OF JAPAN, Band 8, Nr. 70 (E-235)[1507], 3. April 1984 ; & JP-A-58 220 488
- PATENT ABSTRACTS OF JAPAN, Band 11, Nr. 59 (E-482)[2506], 24. Februar 1987 ; & JP-A-61 218 191
- PATENT ABSTRACTS OF JAPAN, Band 10, Nr. 26 (P-425)[2083], 31. Januar 1986 ; & JP-A-60 177 302
- EPO APPLIED TECHNOLOGY SERIES, Vol. 5, Optical Fibres, Seiten 326-327

## Beschreibung

Die vorliegende Erfindung betrifft eine Anordnung für eine integriert-optisches Spektrometer nach dem Oberbegriff des Patentanspruchs 1 und ein Verfahren zur Herstellung einer solchen Anordnung.

Für Wellenlängen-Multiplexer und -Demultiplexer in der optischen Nachrichtentechnik und auch für Sensoranwendungen sind Anordnungen für integriert-optische Spektrometer, d. h. Bauteile die das Licht verschiedener Wellenlängen auf verschiedene Punkte fokussieren, von Interesse. Eine Anordnung der eingangs genannten Art ist beispielsweise aus IEE Proceedings, Vol, 131, Pt. H. No. 5, Oktober 1984, Seiten 290 bis 294 bekannt. Bei dieser Anordnung sind an eine Stirnfläche eines Schichtwellenleiters eine Eingangsfaser und mehrere Ausgangsfasern stoßgekoppelt. Auf der gegenüberliegenden Stirnfläche dieses Schichtwellenleiters ist ein fokussierendes optisches Gitter angeordnet, dessen Gitterlinien im wesentlichen vertikal zur Ebene des Schichtwellenleiters verlaufen. Die Gitterkonstante des Gitters ist nicht fest sondern variiert. Derartige Gitter sind als "Gitter mit Chirp" bekannt. Die variierende GitterKonstante bzw. der Chirp ist so gewählt, daß eine bestimmte Wellenlänge aus der Eingangsfaser auf eine bestimmte Ausgangsfaser fokussiert wird.

Aufgabe der Erfindung ist es, eine neuartige Anordnung der eingangs genannten Art anzugeben, bei der auch Gitter mit fester Gitterkonstante verwendet werden können und dadurch Justier- und Konstrastprobleme vermieden werden können.

Diese Aufgabe wird durch die im kennzeichnenden Teil des Patentanspruchs 1 angegebenen Merkmale gelöst.

Die erfindungsgemäße Anordnung ist ein erster Vorschlag für ein integriert-optisches Spektrometer, bei dem das gebeugte Licht aus einem Rippenwellenleiter in einen Schichtwellenleiter einkoppelbar ist und dort das Licht verschiedener Wellenlängen auf verschiedene Punkte fokussierbar ist. Durch den planaren Aufbau kann das Problem der Fokussierung von dem bekannten Chirp des Gitters auf einen gekrümmten Verlauf des Rippenwellenleiters verlagert werden. Damit können Justierprobleme bei einer holographischen Gittererzeugung vermieden werden, da sowohl die Definition der Fokalpunkte als auch die Plazierung weiterer Bauteile, beispielsweise von Fotodioden, an diesen Fokalpunkten durch Maskenbelichtung realisiert werden können.

Die Wirkungsweise der erfindungsgemäßen Anordnung beruht auf der Lichtbeugung an einem Gitter. Sie wird für eine gegebene Wellenlänge im wesentlichen durch die Auskoppelrichtungen und die Koppelkoeffizienten für die verschiedenen Beugungsordnungen charakterisiert (siehe dazu Appl. Phys. 14 (1977) Seiten 235 bis 254).

Speziell liegt bei einem Strahlungseinfall aus einer Ebene, zu der die Gitterlinien im wesentlichen senkrecht stehen, auch die Auskoppelrichtung, in der das Licht gebeugt wird, in dieser Ebene. Auf einen Rippenwellenleiter angewendet bedeutet dies, daß ein Gitter in oder auf den längsseitigen Begrenzungsflächen des Rippenwellenleiters, welche seitliche Flanken bzw. Stufen des Wellenleiters bilden, im wesentlichen zur Auskopplung in den seitlich angrenzenden Schichtwellenleiter führt. Diese Einschätzung kann aus der Tatsache begründet werden, daß der Schichtwellenleiter im Nahfeld der üblicherweise als Furchen ausgebildeten Gitterlinien in den längsseitigen Begrenzungsflächen des Rippenwellenleiters ansetzt, wo die Phasenfronten noch parallel zu den Furchen verlaufen.

Ist überdies der Schichtwellenleiter nur auf einer Längsseite und nicht auch auf der anderen Längsseite des Rippenwellenleiters vorhanden, so kann für einen bestimmten Bereich von Gitterkonstanten keine Energie auf die Seite des Rippenwellenleiters abgestrahlt werden, auf der sich kein Schichtwellenleiter befindet.

Eine Abschätzung des Koppelkoeffizienten nach den Formeln von Tamir et al (siehe genannte Literaturstelle Appl. Phys.) zeigt, daß die Kopplung für 0,1 »m Korrugationstiefe in der Größenordnung von 0,5/mm für InGaAsP liegen sollte.

Die aus dem Rippenwellenleiter seitlich ausgekoppelte Strahlungsenergie wird für unterschiedliche Wellenlängen in unterschiedliche Richtungen abgestrahlt. Die im Anspruch 3 angegebene bevorzugte Ausführungsform der erfindungsgemäßen Anordnung beruht auf der Erkenntnis, daß der Rippenwellenleiter, der üblicherweise eine konstante Breite aufweist, so gekrümmt werden kann, daß für eine bestimmte Wellenlänge λ₀ die unter einem zugeordneten Winkel α₀ abgestrahlte Energie auf einen Fokalpunkt F₀ fokussiert wird. Die Kurvenform, die dies für äquidistante Gitterlinien entlang des Rippenwellenleiters leistet, ist die logarithmische Spirale. Ihr Ursprung ist der genannte Fokalpunkt F₀ der Strahlung bei der Wellenlänge λ₀. Für Gitter mit fester Gitterkonstante a wird durch die Krümmung des Rippenwellenleiters ein leichter Chirp verursacht, der durch eine Veränderung der Kurvenform korrigiert werden kann.

Die erfindungsgemäße Anordnung ist nicht auf eine logarithmische Spirale begrenzt. Prinzipiell ist jede Kurvenform zulässig. Zu jeder gewählten Kurvenform muß dann jedoch ein Gitter mit einem zugeordneten Chirp verwendet werden, bei dem dann die gleichen Verhältnisse vorliegen, wie bei einem Gitter mit fester Gitterkonstante auf einer logarithmischen Spirale.

Der besondere Vorteil der erfindungsgemäßen Anordnung liegt jedoch gerade auch darin, daß Gitter mit fester Gitterkonstante verwendet werden können. Ihr Aufbau ist planar, wodurch die Integration von Fotodioden, Wellenleitern usw. möglich ist.

Die Ansprüche 2 bis 4 geben bevorzugte Ausgestaltungen der erfindungsgemäßen Anordnung an.

Ein besonders vorteilhaftes verfahren zur Herstellung einer erfindungsgemäßen Anordnung ist im Anspruch 8 angegeben, dessen Grundlage in einem neuartigen Verfahren zur Herstellung eines Gitters auf einer seitlichen Begrenzungsfläche eines Streifen- oder Schichtwellenleiters ist, das im Anspruch 5 angegeben ist. Dieses neuartige Verfahren wurde bei Überlegungen erfunden, wie eine erfindungsgemäße Anordnung möglichst einfach und ohne die Notwendigkeit einer mechanischen Bearbeitung eines Substrats hergestellt werden kann. Dieses Verfahren beruht auf der Erkenntnis, daß beim Übertragen eines Oberflächengitters durch Ätzen, insbesondere durch Trockenätzen, sich dieses Gitter auch auf Stufen oder Flanken überträgt, die beim Ätzvorgang entstehen und höherliegende maskierte Bereiche des Oberflächengitters von den in die Tiefe übertragenen Bereiche trennen. Im endgüttigen Produkt bleibt nur die auf den seitlichen Begrenzungsflächen des Rippenwellenleiters vorhandene Gitterstruktur erhalten, sowie die die auf der darumterliegenden Stirnseite des Schichtwellenleiters vorhandene Gitterstruktur, im Unterschied zu Jap. Abstracts, Vol.11, No. 59, (E-482), [2506] (zu JP-A-61-218191).

Bevorzugte Ausgestaltungen des Verfahrens nach Anspruch 5 gehen aus den Ansprüchen 6 und 7 hervor.

Anspruch 9 gibt eine bevorzugte Ausgestaltung des speziellen Verfahrens nach Anspruch 8 an, wobei es zweckmäßig ist, wie im Anspruch 10 angegeben, vorzugehen.

Ein erfindungsemäßes Verfahren, insbesondere die Verfahren nach Anspruch 9 oder 10, eignen sich für die Herstellung von Anordnungen in InGaAsP. Zweckmäßig ist es dabei, wenn die für den Rippen- und Schichtwellenleiter vorgesehene Schicht aus InGaAsP und die Deckschicht und eine vorhandene Zwischenschicht aus InP besteht (Anspruch 11).

Durch das erfindungsgemäße Verfahren nach Anspruch 5 lassen sich auch Anordnungen für ein integriert optisches Spektrometer von der Art herstellen, wie sie in der eingangs genannten Literaturstelle IEE Proc. angegeben sind, wobei sich die nach dem erfindungsgemäßen Verfahren hergestellten Anordnungen von den bekannten Anordnungen durch die im kennzeichnenden Teil des Patentanspruchs 13 angegebenen Merkmale unterscheiden.

Die Ansprüche 14 und 15 geben bevorzugte Ausgestaltungen der erfindungsgemäßen Anordnung nach Anspruch 13 an.

Die Erfindung wird in der nun folgenden Beschreibung anhand der Figuren näher erläutert. Von den Figuren zeigen:
- Figur 1: eine Draufsicht auf eine schematisch dargestellte Anordnung, die aus einem gekrümmten Rippenwellenleiter und einem angrenzenden Schichtwellenleiter besteht,
- Figuren 2a bis 2e: in perspektivischer Darstellung und im Schnitt fünf Verfahrensstufen bei der Herstellung einer Anordnung nach Figur 1, und

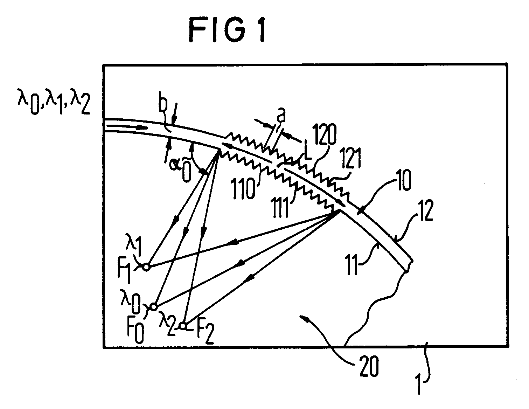

Bei der in Figur 1 dargestellten Anordnung sind der Rippenwellenleiter 10 und der auf einer Längsseite angrenzende Schichtwellenleiter 20 auf einem gemeinsamen Substrat 1 angeordnet. Die Ebene des Schichtwellenleiters 20 und auch des Rippenwellenleiters 10 ist parallel zur Zeichenebene. Der Rippenwellenleiter 10 verläuft in der genannten Ebene gekrümmt und weist zwei längsseitige Begrenzungsflächen 11 und 12 auf, die Stufen oder Flanken definieren.

Auf jeder längsseitigen Begrenzungsfläche 11 und 12 ist je ein Gitter 110 bzw. 120 ausgebildet, dessen Gitterlinien 111 bzw. 121 in Form von Furchen senkrecht zur Zeichenebene verlaufen. Die beiden Gitter 110 und 120 stehen einander gegenüber und haben eine Länge L. Die Gitterkonstante a beider Gitter 110, 120 ist fest.

An den Rippenwellenleiter 10 grenzt auf der Längsseite, auf der sich die Begrenzungsfläche 11 befindet, der Schichtwellenleiter 20 an, beispielsweise über der ganze Länge des Rippenwellenleiters 10.

Die zu trennenden Wellenlängen, beispielsweise die Wellenlänge λ₀, λ₁, λ₂ werden in den Rippenwellenleiter 10 über eine seiner stirnseitigen Enden, beispielsweise das Ende 101 eingekoppelt, und längs dieses Wellenleiters 10 zu den Gittern 110 und 120 geführt.

Der Rippenwellenleiter 10 ist so gekrümmt, daß für eine bestimmte Wellenlänge, beispielsweise die Wellenlänge λ₀, die unter einem Winkel α₀ abgestrahlte Energie auf einen Fokalpunkt F₀ fokussiert wird, bei dem ein Detektor oder das Ende eines Wellenleiters, beispielsweise einer Faser, angeordnet sein kann. Die Kurvenform, die dies für äquidistante Gitterfurchen entlang des Rippenwellenleiters 10 leistet, ist die logarithmische Spirale. Ihr Ursprung ist der Fokalpunkt F₀ der Strahlung bei der bestimmten Wellenlänge λ₀. Die logarithmische Spirale wird von den vom Ursprung F₀ ausgehenden Strahlen immer unter dem gleichen Winkel geschnitten.

Die von der bestimmten Wellenlänge λ₀ verschiedenen Wellenlängen, beispielsweise die Wellenlängen λ₁ und λ₂, werden in anderen Fokalpunkten F₁ bzw. F₂ fokussiert, in denen ebenfalls ein Detektor oder das Ende eines Lichtwellenleiters angeordnet sein kann.

Die in Figur 1 dargestellte Anordnung kann in InGaAsP beispielsweise folgendermaßen hergestellt werden:

Auf ein Substrat 1 aus InP wird eine 0,7 »m dicke Schicht 2 aus In_{0,89}Ga_{0,11}As_{0,24}P_{0,76}, eine 0,2 »m dicke Zwischenschicht 3 aus InP, eine 0,2 »m dicke Schicht 4 aus In_{0,89}Ga_{0,11}As_{0,24}P_{0,76} und schließlich eine 0,2 »m dicke Deckschicht 5 aus InP epitaktisch aufgewachsen. Sowohl die 0,7 »m dicke Schicht 2 aus InGaAsP als auch das 1,1 »m dicke Schichtpaket aus der 0,7 »m dicken Schicht 2, der 0,2 »m dicken Zwischenschicht 3 und der 0,2 »m dicken Schicht 4 sind monomodig.

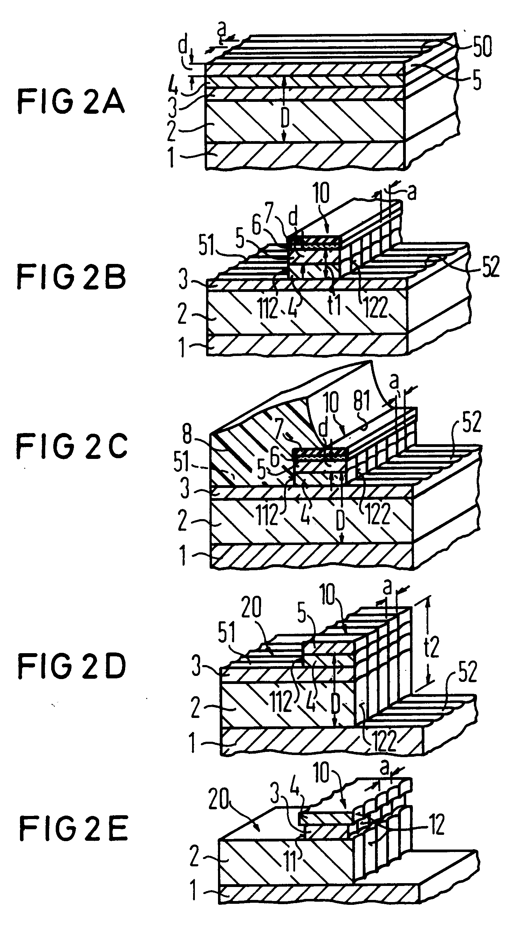

In die Deckschicht 5 wird nach bekannten technologischen Verfahren, beispielsweise ein Oberflächengitter 50 geätzt, wonach die in Figur 2a dargestellte Verfahrensstufe entsteht.

Auf dieses Oberflächengitter 50 wird eine Al₂O₃-Schicht als Trockenätzmaske aufgebracht. Ein Fotolackstreifen von beispielsweise 1 »m Breite wird als nächstes fotolithografisch erzeugt und naßchemisch in die Al₂O₃-Schicht übertragen, so daß ein Streifen 7 aus Al₂O₃ entsteht, der von dem Fotolackstreifen 6 abgedeckt ist (siehe Figur 2b).

Durch Trockenätzen, beispielsweise mit einem N₂-Ionenstrahl, wird im nächsten Schritt der Streifen 7 aus Al₂O₃ durch die Deckschicht 5 in die 0,2 »m dicke Schicht 4 übertragen, in dem die vom Streifen 7 nicht abgedeckten und damit freiliegenden Teile des Oberflächengitters 50 in die Tiefe übertragen werden. Dabei überträgt sich das Oberflächengitter auch in die entstehenden Flanken bzw. Stufen 112 und 122, welche längsseitige Begrenzungsflächen einer durch den Streifen 7 definierten Rippe bilden. Diese Verfahrensstufe ist in der Figur 2b dargestellt.

Im nächsten Schritt wird erneut Fotolack 8 aufgetragen und fotolithografisch so strukturiert, daß auf der Seite, in die fokussiert wird, d.h. auf der Seite, auf welcher der Schichtwellenleiter 20 an den Rippenwellenleiter 10 angrenzt, der in die Tiefe übertragene Teil 51 des Oberflächengitters 50 mit diesem Lack 8 bedeckt ist. Bei diesem Schritt ist darauf zu achten, daß die Grenze 81 des Fotolacks 8 auf dem Rippenwellenleiter 10 liegt. Das bedeutet, daß die Maske aus dem Fotolack 8 auf 1 »m genau justiert werden muß. Die entsprechende Verfahrensstufe ist in Figur 2c dargestellt.

In einem nächsten Schritt wird die 0,2 »m dicke Zwischenschicht 3 aus InP und die 0,7 »m dicke Schicht 2 aus InGaAsP auf der nicht maskierten Seite des Rippenwellenleiters 10 durch Trockenätzen abgetragen. Danach wird die ganze Fotolackmaske verascht und der Streifen 7 aus Al₂O₃ mit Flußsäure abgeätzt. Die entsprechende Verfahrensstufe ist in Figur 2d dargestellt. Bei dieser Stufe ist das Oberflächengitter noch in der gesamten Oberfläche des Schichtsystems vorhanden.

Das Oberflächengitter wird dann zusammen mit den beiden Schichten 3 und 5 aus InP naßchemisch durch selektives Ätzen in Salzsäure entfernt. Die entsprechende Endstufe ist in der Figur 2e dargestellt. Ein Gitter ist bei dieser Endstufe nur noch auf den längsseitigen Begrenzungsflächen 11 und 12 des Rippenwellenleiters 10 vorhanden, der durch die Schichten 3 und 4 und den unter diesen Schichten liegenden Bereich der Schicht 2 definiert ist. Der links angrenzende Bereich der Schicht 2 bildet den Schichtwellenleiter 20. Die verbliebenen Gitter auf den längsseitigen Begrenzungsflächen 11 und 12 bilden die gewünschten Gitter 110 and 120.

Bei einem Ausführungsbeispiel wurde eine Auskopplung unter α₀ = 45° bei einer Designwellenlänge λ₀ = 1550 nm gewählt. Die resultierende Gitterkonstante a für die Gitter 110 und 120 beträgt dabei etwa 280 nm. Bei einem gewünschten Abstand von 4 mm zum Fokalpunkt F₀ beträgt der minimale Krümmungsradius etwa 5,6 mm. Die zur Auskopplung erforderliche Länge L des Gitters beträgt ebenfalls etwa 4 mm. Die Kurvenform des gekrümmten Wellenleiters entspricht etwa einer logarithmischen Spirale. Für ein derartiges Bauteil ist ein Kanalabstand von 5 nm von einem Abstand der Fokalpunkte von 30 »m möglich. Die Kurvenform des Rippenwellenleiters wäre exakt eine logarithmische Spirale, wenn die Gitterkonstante a des Gitters auf der gesamten Länge L konstant wäre. Für ein vorgegebenes Gitter mit Chirp gibt es eine zugeordnete Kurvenform des Rippenwellenleiters, bei der die gleichen Verhältnisse vorliegen wie bei einer logarithmischen Spirale und einem Gitter mit fester Gitterkonstante. Dies gilt auch umgekehrt, d.h. zu jeder Kurvenform des Rippenwellenleiters gibt es ein zugeordnetes Gitter mit Chirp, bei dem ebenfalls die genannten Verhältnisse wieder vorliegen.

Bezogen auf das genannte Ausführungsbeispiel können bei größeren Kanalabständen auch kleinere Abmessungen für die Anordnung erzielt werden. So ergibt sich beispielsweise für einen Kanalabstand von 20 nm und einem Abstand der Fokalpunkte von 30 »m ein Abstand von 1 mm vom Beginn des Gitters bis zum betreffenden Fokalpunkt. Der Krümmungsradius am Beginn des Gitters ist dann nur noch 1,4 mm, so daß eine höhere Brechzahl für den Rippenwellenleiter gewählt werden muß, um Abstrahlungsverluste durch die Krümmungen zu vermeiden. Durch die damit einhergehende Erhöhung des Koppelwirkungsgrades wird die notwendige Koppellänge gleichzeitig etwas verringert.

## Patentansprüche

1. Anordnung für ein integriert optisches Spektrometer, mit einem eine flächig sich erstreckende wellenleitende Schicht (2) aufweisenden Schichtwellenleiter (20) und einem fokussierenden optischen Gitter (110, 120) mit zur Ebene der wellenleitenden Schicht (2) senkrechten Gitterlinien (111, 121), **dadurch gekennzeichnet**, daß ein streifenartiger Rippenwellenleiter (10) zum Führen einer optischen Welle vorgesehen ist, der durch eine auf der wellenleitenden Schicht (2) angeordneten gebogen verlaufenden Rippe (3, 4) in der wellenleitenden Schicht (2) unter der Rippe (3, 4) definiert ist, wobei eine Randkante der wellenleitenden Schicht (2) eine im wesentlichen gebogen verlaufende und zur Ebene der wellenleitenden Schicht (2) im wesentlichen senkrechte längsseitige Begrenzungsfläche (11) bildet und die andere Flanke der Rippe (3, 4) gebogen und zur Ebene der wellenleitenden Schicht (2) im wesentlichen senkrecht verläuft, und daß die Gitterlinien (111, 121) des fokussierenden Gitters (110, 120) auf zumindest der Flanken der Rippe (3, 4) und der Randkante der wellenleitenden Schicht (2) ausgebildet sind, wobei dieses Gitter (110, 120) einen Anteil der im Rippenwellenleiter (10) geführten optischen Welle aus dem Bereich des Rippenwellenleiters (10) in den außerhalb dieses Bereiches liegenden Teil der wellenleitenden Schicht (2) auskoppelt, und aufgrund des gebogenen Verlaufs der Randkante auf der dieses Gitter (110, 120) ausgebildet ist, auf einen in diesem Teil der wellenleitenden Schicht (2) liegenden Punkt (F₀, F₁, F₂) fokussiert.

2. Anordnung nach Anspruch 1,
**dadurch gekennzeichnet**,
daß die Flächen auf denen das Gitter (110, 120) ausgebildet ist, zumindest auf einer Länge (L) des Gitters (110, 120) im wesentlichen entsprechend einem Stück einer logarithmischen Spirale gekrümmt verlaufen, und daß das Gitter (110, 120) eine feste Gitterkonstante (a) aufweist.

3. Anordnung nach Anspruch 1 oder 2,
**dadurch gekennzeichnet**,
daß auf beiden Flanken (110, 120) der Rippe (10) je ein Gitter (110, 120) vorgesehen ist, und daß diese beiden Gitter (110 120) einander gegenüberliegen.

4. Anordnung nach einem der vorhergehenden Ansprüche,
**dadurch gekennzeichnet**,
daß sowohl der Schicht als auch der Rippenwellenleiter (20, 10) monomodig sind.

5. Verfahren zur Herstellung einer integriert optischen Anordnung mit einem optischen Gitter (110, 120; 130) auf einer seitlichen Begrenzungsfläche (11, 12; 13) eines Streifen-wellenleiters oder der Flanke einer zu einem Rippenwellenleiter (10) gehörigen, auf einer wellenleitenden Schicht (2) angeordneten Rippe, wobei die Gitterlinien (111, 121) im wesentlichen senkrecht zur Ebene des Wellenleiters (10) angeordnet sind, **dadurch gekennzeichnet**, daß auf einer selektiv entfernbaren Deckschicht (5), die über einer Schichtenfolge (2, 3, 4) angeordnet ist, welche für den zu erzeugenden Wellenleiter (10) vorgesehen ist, ein reliefartiges Oberflächengitter (50) mit vorbestimmter Gitterkonstante (a) ausgebildet wird, daß das Oberflächengitter (50) teilweise mit einer Ätzmaske (6, 7) abgedeckt wird, deren Umriß dem zu erzeugenden Rippenwellenleiter (10; 30) in Draufsicht entspricht, daß durch Ätzen der nicht abgedeckte Teil (51, 52) des reliefartigen Oberflächengitters (50) in eine Tiefe (t1) übertragen wird, die größer als die Dicke (d) der Deckschicht (5) ist, und daß danach die Deckschicht (5) selektiv entfernt wird.

6. Verfahren nach Anspruch 5,
**dadurch gekennzeichnet,**
daß ein nicht abgedeckter Teil (52) des Oberflächengitters (50) mindestens bis zur Unterseite der den betreffenden Wellenleiter bildenden Schichtenfolge (2, 3, 4) in die Tiefe übertragen wird.

7. Verfahren nach Anspruch 5 oder 6,
**dadurch gekennzeichnet**,
daß ein nicht abgedeckter Teil (51, 52) des Oberflächengitters durch Trockenätzen in die Tiefe übertragen wird.

8. Verfahren nach einem der vorhergehenden Ansprüche 5 bis 7 zur Herstellung einer Anordnung nach einem der Ansprüche 1 bis 4,
**dadurch gekennzeichnet**,
daß die für die Rippe und den Schichtwellenleiter (10, 20) vorgesehene Schichtenfolge (2, 3, 4) eine Dicke (D) aufweist, die der Gesamtdicke des Rippenwellenleiters (10) entspricht, daß in einem ersten Übertragungsschritt der - nicht durch die Ätzmaske (6, 7) abgedeckte - Teil (51, 52) des Oberflächengitters (50) in eine Tiefe (t1) übertragen wird, die kleiner als die Dicke (D) der vorgesehenen Schichtenfolge (2, 3, 4) ist, daß der auf einer Seite der Ätzmaske (6, 7) nicht abgedeckte Teil (51) des in die Tiefe übertragenen Oberflächengitters (50) durch eine weitere Ätzmaske (8) abgedeckt wird und daß in einem zweiten Übertragungsschritt der auf der anderen Seite der Ätzmase liegende nicht abgedeckte Teil (52) des in die Tiefe übertragenen Oberflächengitters (50) weiter in eine vom ursprünglichen Oberflächengitter (50) auf der Deckschicht (5) aus gemessenen Tiefe (t2) übertragen wird, die mindestens gleich der Summe aus der Dicke (d) der Deckschicht (5) und der Dicke (D) der Schichtenfolge (2, 3, 4) ist.

9. Verfahren nach Anspruch 8,
**dadurch gekennzeichnet**,
daß die für die Schichtenfolge (2, 3, 4) eine selektiv entfernbare Zwischenschicht (3) enthält, die auf oder über einer die wellenleitende Schicht bildenden Schicht (2) aufgebracht ist, bis zu der oder in die beim ersten Übertragungsschritt das Oberflächengitter (50) in die Tiefe übertragen wird, und die nach diesem Schritt außerhalb der Rippe (10) entfernt wird.

10. Verfahren nach Anspruch 9,
**dadurch gekennzeichnet**,
daß die für den zu erzeugenden Rippen- und Schichtwellenleiter (10, 20) vorgesehene Schichtenfolge (2, 3, 4) eine zwischen der Zwischenschicht (3) und der Deckschicht (5) angeordnete Schicht (4) aufweist, die aus dem gleichen Material besteht, wie die die wellenleitende Schicht bildende Schicht (2).

11. Verfahren nach einem der Ansprüche 8 bis 10,
**dadurch gekennzeichnet**,
daß die Schichtenfolge (2, 3, 4) aus InGaAsP und die Deckschicht (5) sowie eine vorhandene Zwischenschicht (3) aus InP besteht.

## Claims

1. Arrangement for an integrated optical spectrometer having a layer waveguide (20) exhibiting a wave-guiding layer (2) extending in a plane, and a focusing optical grating (110, 120) with grating lines (111, 121) perpendicular to the plane of the wave-guiding layer (2), characterized in that a strip-like ribbed waveguide (10) is provided for guiding an optical wave, which waveguide (10) is defined by a rib (3, 4) running in a curve arranged on the wave-guiding layer (2) in the wave-guiding layer (2) under the rib (3, 4), one edge of the wave-guiding layer (2) forming a longitudinal boundary surface (11) running essentially in a curve and essentially perpendicular to the plane of the wave-guiding layer (2) and the other flank of the rib (3, 4) being bent and running in a curve and essentially perpendicular to the plane of the wave-guiding layer (2), and in that the grating lines (111, 121) of the focusing grating (110, 120) are formed on at least the flanks of the rib (3, 4) and the edge of the wave-guiding layer (2), this grating (110, 120) emitting a proportion of the optical wave guided in the rib waveguide (10) out of the region of the ribbed waveguide (10) into the part of the wave-guiding layer (2) lying outside this region and, because of the curved course of the edge on which this grating (110, 120) is formed, focusing it onto a point (F₀, F₁, F₂) lying in this part of the wave-guiding layer (2).

2. Arrangement according to Claim 1, characterized in that the surfaces on which the grating (110, 120) is formed run in a curve corresponding essentially to a part of a logarithmic spiral, at least over a length (L) of the grating (110, 120), and in that the grating (110, 120) has a fixed grating constant (a).

3. Arrangement according to Claim 1 or 2, characterized in that a grating (110, 120) is provided in each case on both flanks (110, 120) of the rib (10) and in that these two gratings (110, 120) lie opposite each other.

4. Arrangement according to one of the preceding claims, characterized in that both the layer and the ribbed waveguide (20, 10) are of monomode type.

5. Method for producing an integrated optical arrangement having an optical grating (110, 120; 130) on a lateral limiting surface (11, 12; 13) of a strip waveguide or the flank of a rib belonging to a ribbed waveguide (10) and arranged on a wave-guiding layer (2), the grating lines (111, 121) being arranged essentially perpendicular to the plane of the waveguide (10), characterized in that, on a selectively removable covering layer (5) which is arranged over a series of layers (2, 3, 4) which are provided for the waveguide (10) to be generated, a relief-like surface grating (50) having a predetermined grating constant (a) is formed, in that the surface grating (50) is partially covered by an etched mask (6, 7) whose outline in plan view corresponds to the ribbed waveguide (10; 30) to be generated, in that the uncovered part (51, 52) of the relief-like surface grating (50) is transferred by etching down to a depth (t1) which is greater than the thickness (d) of the covering layer (5), and in that the covering layer (5) is subsequently selectively removed.

6. Method according to Claim 5, characterized in that an uncovered part (52) of the surface grating (50) is transferred down at least as far as the underside of the series of layers (2, 3, 4) forming the relevant waveguide.

7. Method according to Claim 5 or 6, characterized in that an uncovered part (51, 52) of the surface grating (50) is transferred down by dry etching.

8. Method according to one of the preceding Claims 5 to 7 for producing an arrangement according to one of Claims 1 to 4, characterized in that the series of layers (2, 3, 4) which are provided for the rib and the layer waveguide (10, 20) has a thickness (D) which corresponds to the total thickness of the ribbed waveguide (10), in that, in a first transfer step, the part (51, 52) - not covered by the etched mask (6, 7) - of the surface grating (50) is transferred to a depth (t1) which is smaller than the thickness (D) of the provided series of layers (2, 3, 4), in that the uncovered part (51) of the surface grating (50) transferred down on one side of the etched mask (6, 7) is covered by a further etched mask (8) and in that, in a second transfer step, the uncovered part (52) of the surface grating (50) transferred down on the other side of the etched mask is further transferred to a depth (t2) measured from the original surface grating (50) on the covering layer (5) and which is at least equal to the sum of the thickness (d) of the covering layer (5) and the thickness (D) of the series of layers (2, 3, 4).

9. Method according to Claim 8, characterized in that the series of layers (2, 3, 4) contains a selectively removable intermediate layer (3), which is applied on or over a layer (2) forming the wave-guiding layer, as far as or into which layer (2) the surface grating (50) is transferred down in the first transfer step and which intermediate layer (3) is removed outside the rib (10) after this step.

10. Method according to Claim 9, characterized in that the series of layers (2, 3, 4) provided for the ribbed and layer waveguide (10, 20) to be generated has a layer (4) arranged between the intermediate layer (3) and the covering layer (5), which comprises the same material as the layer (2) forming the wave-guiding layer.

11. Method according to one of Claims 8 to 10, characterized in that the series of layers (2, 3, 4) comprises InGaAsP and the covering layer (5) and an intermediate layer (3) present comprise InP.

## Revendications

1. Dispositif pour un spectromètre optique intégré, comportant un guide d'ondes en forme de couche (20), ayant une couche (2) de guidage des ondes, qui s'étend à plat, et un réseau optique de focalisation (110,120) comportant des traits (111,121) qui sont perpendiculaires au plan de la couche (2) de guidage des ondes, caractérisé par le fait qu'il est prévu un guide d'ondes en forme de bande à nervure (10) servant à guider une onde optique et qui est défini, par une nervure coudée (3,4) disposée sur la couche (2) de guidage des ondes, dans cette couche (2) de guidage des ondes au-dessous de la nervure (3,4), un bord marginal de la couche (3) de guidage des ondes formant une face limite longitudinale (11) qui est sensiblement coudée et est sensiblement perpendiculaire au plan de la couche (2) de guidage des ondes, tandis que l'autre flanc de la nervure (3,4) est coudé et s'étend sensiblement perpendiculairement au plan de la couche (2) de guidage des ondes, et que les traits (111,121) du réseau de focalisation (110,120) sont formés au moins sur les flancs de la nervure (3,4) et du bord marginal de la couche (2) de guidage des ondes, ce réseau (110,120) découplant une partie de l'onde optique guidée dans le guide d'ondes (10) en forme de nervure, à partir de la zone de ce guide d'ondes (10) en forme de nervure pour l'introduire dans la partie, située au-dessous de cette zone, de la couche (2) de guidage des ondes, et focalise cette partie de l'onde en un point (F₀,F₁,F₂) situé dans cette partie de la couche (2) de guidage des ondes, en raison de la forme coudée du bord marginal, sur lequel est formé ce réseau (110,120).

2. Dispositif suivant la revendication 1, caractérisé par le fait que les surfaces, sur lesquelles le réseau (110, 120) est formé, s'étendent avec une forme cintrée au moins sur une longueur (L) du réseau (110, 120), pour l'essentiel sous une forme correspondant à une partie d'une spirale logarithmique, et que le réseau (110,120) a un pas fixe (a).

3. Dispositif suivant la revendication 1 ou 2, caractérisé par le fait que des réseaux respectifs (110,120) sont prévus sur les deux flancs (110,120) de la nervure (10) et que ces deux réseaux (110,120) sont en vis-à-vis.

4. Dispositif suivant l'une des revendications précédentes, caractérisé par le fait qu'aussi bien la couche que le guide d'ondes en forme de nervure (20,10) sont monomodes.

5. Procédé pour fabriquer un dispositif optique intégré comportant un réseau optique (110,120,130) situé sur une surface latérale limite (11,12;13) d'un guide d'ondes en forme de bande ou sur les flancs d'une nervure faisant partie d'un guide d'ondes à nervure (10) et disposée sur une couche (2) de guidage des ondes, les traits (111,121) du réseau étant disposés sensiblement perpendiculairement au plan du guide d'ondes (10), caractérisé par le fait qu'un réseau superficiel en relief (50) possédant un pas (a) prédéterminé est formé sur une couche de revêtement (5) pouvant être retirée de façon sélective et qui est disposée au-dessus d'une succession de couches (2,3,4), qui sont prévues pour le guide d'ondes (10) devant être formé, qu'on recouvre le réseau superficiel (50) en partie par un masque de gravure (6,7), dont le contour correspond, selon une vue en plan, au guide d'ondes à nervure (10;30) devant être formé, par gravure, on transfère la partie non recouverte (51,52) du réseau superficiel en relief (50) à une profondeur (t1) qui est supérieure à l'épaisseur (d1) de la couche de revêtement (5) et qu'ensuite on élimine de façon sélective la couche de revêtement (5).

6. Procédé suivant la revendication 5, caractérisé par le fait qu'une partie non recouverte (52) du réseau superficiel (50) est transférée en profondeur au moins jusqu'à la face inférieure de la succession de couches (2,3,4) qui forment le guide d'ondes considéré.

7. Procédé suivant la revendication 5 ou 6, caractérisé par le fait qu'on réalise le transfert en profondeur d'une partie non recouverte (51,52) du réseau superficiel au moyen d'une gravure à sec.

8. Procédé suivant l'une des revendications précédentes 5 à 7 pour la fabrication d'un dispositif suivant l'une des revendications 1 à 4, caractérisé par le fait que la succession de couches (2,3,4), qui est prévue pour la nervure et le guide d'ondes en forme de couche (10,20), possède une épaisseur (D), qui correspond à l'épaisseur totale du guide d'ondes à nervure (10), que lors d'une première étape de transfert, on transfère la partie (51,52) - qui n'est pas recouverte par le masque de gravure (6,7) - du réseau superficiel (50) à une profondeur (t1), qui est inférieure à l'épaisseur (D) de la succession de couches prévue (2,3,4), qu'on transfère en profondeur la partie (59), qui n'est pas recouverte sur un côté du masque de gravure (6,7), du réseau superficiel (50), à l'aide d'un autre masque de gravure (8) et que, lors d'une seconde étape de transfert, on transfère la partie non recouverte (52), qui est située de l'autre côté du masque, du réseau superficiel (50) transféré en profondeur, plus à l'intérieur à une profondeur (t2) mesurée à partir du réseau superficiel initial (50) sur la couche de revêtement (5) et qui est au moins égale à la somme de l'épaisseur (d) de la couche de revêtement (5) et de l'épaisseur (D) de la succession de couches (2,3,4).

9. Procédé suivant la revendication 8, caractérisé par le fait que la succession de couches (2,3,4) contient une couche intermédiaire (3) pouvant être éliminée de façon sélective et qui est déposée sur ou au-dessus d'une couche (2) qui forme la couche de guidage des ondes et jusqu'à ou jusque dans laquelle le réseau superficiel (5) est transféré en profondeur lors de la première étape de transfert, et qui est éliminée, après cette étape, en dehors de la nervure (10).

10. Procédé suivant la revendication 9, caractérisé par le fait que la succession de couches (2,3,4), prévue pour le guide d'ondes à nervure et le guide d'onde en forme de couche (10,20) devant être formés, comprend une couche (4) disposée entre la couche intermédiaire (3) et la couche de revêtement (5) et qui est constituée par le même matériau que la couche (2) formant la couche de guidage des ondes.

11. Procédé suivant l'une des revendications 8 à 10, caractérisé par le fait que la succession de couches (2,3,4) est en InGaAsP et que la couche de revêtement (5) ainsi qu'une couche intermédiaire présente (3) sont en InP.
